(19)

Europäisches
Patentamt
European
Patent Office
Office européen
des brevets

(11) **EP 3 492 838 A1**

(12) **EUROPEAN PATENT APPLICATION**

(43) Date of publication:
**05.06.2019 Bulletin 2019/23**

(21) Application number: **18209124.9**

(22) Date of filing: **29.11.2018**

(51) Int Cl.:
*F25B 5/02* (2006.01)    *F25B 6/04* (2006.01)
*F25B 7/00* (2006.01)    *F25B 9/00* (2006.01)
*F25B 49/02* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.11.2017   GB 201719885**
**29.08.2018   GB 201814048**

(71) Applicant: **JTL Systems Limited**
**Newbury, Berks RG14 5SJ (GB)**

(72) Inventor: **LAWRENCE, John Michael Walmsley**
**Newbury, Berkshire RG14 1XF (GB)**

(74) Representative: **Abel & Imray**
**Westpoint Building**
**James Street West**
**Bath BA1 2DA (GB)**

(54) **A CONDENSER DEVICE FOR A REFRIGERATION SYSTEM AND METHOD OF CONTROLLING THEREOF**

(57)    A condenser device (100) for use in a refrigeration system. The condenser (100) comprises a first refrigerant (1) flowing in a conduit in a direction of from an upstream end of the condenser device (100) towards a downstream end of the condenser device (100), the first refrigerant (1) having a flammability class of class 1; and a plurality of condensing stages (111a to 111e) in series connection, the condensing stages (111a to 111e) being configured such that each one of the plurality of condensing stages may be switched on or off independent of other condensing stages. The condenser device (100) further comprises a second refrigerant (2) for cooling and condensing the first refrigerant (1). The second refrigerant (1) is different from the first refrigerant (1), and the second refrigerant has a flammability class of class 1 or class 2L.

Figure 1

EP 3 492 838 A1

**Description**

Field of the Invention

The present invention concerns condenser devices for use in refrigeration systems and the methods of controlling them. More particularly, but not exclusively, this invention concerns condenser devices for use in refrigeration systems suitable for use for cabinets in a supermarket or the like to keep food items cold and display those items for sale. The invention also concerns methods of controlling these condenser devices.

Background of the Invention

Commercial refrigeration systems, for example refrigeration systems for cabinets, display cases, display cabinets, island cabinets and other frozen food containers, have been widely used in major shopping malls, supermarkets, independent food stores, restaurants or other similar venues. A typical commercial refrigeration system may comprises a receiver for a refrigerant, an evaporator for evaporating the refrigerant, thereby removing heat from the conditioned space, a compressor for compressing the evaporated refrigerant, and a condenser device for ejecting the heat to external space. There are concerns about conventional refrigerants which might escape into the atmosphere, in that they may be powerful greenhouse gasses and/or may have serious safety concerns if they are flammable. For example, widely used refrigerants such as R404A and R507 are undergoing a phase-out process in the EU and will be banned eventually.

It is clearly desirable to develop and market a system which uses only one or more refrigerants which are safe and environmentally friendly.

International standard ISO 817 provides a system for assigning a safety classification to refrigerants based on toxicity and flammability data. According to ISO 817:2014, flammability of refrigerants is defined in four separate categories. Class 1 refrigerants are non-flammable; class 2L refrigerants are mildly flammable; class 2 refrigerants are flammable and class 3 refrigerants are highly flammable.

Switching to low Global Warming Potential (GWP) refrigerants has partly come about through regulatory restrictions. Increasing concerns about the impact of refrigerants on the environment and on climate change are driving new regulatory policies to restrict and lower the GWP impact of refrigerants used in the refrigeration industry.

Consideration has been given to providing a system which uses only one or more refrigerants which have very low GWPs with the refrigerants within the system being in small enough quantities to be accepted under the relevant safety standards.

Currently there are commercial refrigeration systems utilising R744 (carbon dioxide, $CO_2$) as refrigerant. R744 is a class 1 refrigerant according to ISO 817:2014 and has a GWP value of 1. There are two fundamental types of $CO_2$ systems - Booster and Cascade. Traditional $CO_2$ Booster systems (transcritical systems) use R744 for both the lower-temperature pack (the frozen pack) and the higher-temperature pack (the chill pack). These systems are not efficient in ambient temperatures exceeding 24 °C. This is because R744 has a critical temperature of approximately 31 °C and a critical pressure of approximately 70 Bar. It means that, to operate conventionally (and to refrigerate efficiently), the condensing temperature must be below this condition - i.e. there must be some latent heat to reject. Maintaining condensing below the critical temperature is difficult in places with a higher ambient temperature, for example in countries with an ambient temperature exceeding 24 °C.

Cascade systems using two refrigerants (one being R744) are also known in the art. In a typical cascade system, one refrigerant (R744) is used for the lower-temperature pack (the frozen pack) and a second refrigerant (for example a traditional hydrofluorocarbon (HFC) refrigerant) is used for the higher-temperature pack (the chill pack). The two refrigerants run through their independent change of state cycles and come together at a heat exchanger, for example a plate heat exchanger (PHE). As the second refrigerant is used for both chill packs and condensing R744, the quantity of the second refrigerant is likely to be large and varied as the amount required to be circulating in the cooling system varies with external ambient temperature and load from the cabinets and cold rooms. To cover this variation, a receiver holding a significant quantity of refrigerant is present between the condenser device and the supplies into the evaporators.

Both Booster and Cascade systems are liable to lose the R744 Refrigerant as a result of reaching a higher pressure than intended and thus causing a high pressure safety valve to open. This is a particular problem with Booster systems.

There remains a need to improve on the standard Cascade system by controlling the condensed amount of the R744 refrigerant to match the total demand from the loads, to control the supply of R744 to the loads by using separate, but parallel, refrigeration packs for the chill and the frozen loads. It would also be desirable, from the maintenance point of view, if the improved system could be developed based on systems that are established practice and understood by refrigeration maintenance engineers.

The present invention seeks to mitigate the above-mentioned problems and/or to satisfy the above-mentioned needs. Alternatively or additionally, the present invention seeks to provide a condenser device with improved usability and controllability for refrigeration systems suitable for use in a supermarket or the like.

Summary of the Invention

According to the first aspect of the invention, there is provided a condenser device for use in a refrigeration system comprising: a) a first refrigerant flowing in a conduit in a direction of an upstream end of the condenser device towards a downstream end of the condenser device, the first refrigerant having a flammability class of class 1; and b) a plurality of condensing stages in series connection, the condensing stages being configured such that each one of the plurality of condensing stages may be switched on or off independent of other condensing stages. The condenser device further comprises a second refrigerant for cooling and condensing the first refrigerant. The second refrigerant is different from the first refrigerant; and the second refrigerant has a flammability class of class 1 or class 2L.

Preferably, the first refrigerant, or the second refrigerant, or both, have a GWP of less than 2000, more preferably less than 1000, even more preferably less than 800, for example less than 700.

Preferably, the first refrigerant comprises R744. More preferably, the first refrigerant comprises at least 50% R744 by volume, or at least 70% R744 by volume, or least 90% R744 by volume. In a preferred embodiment of the invention, the first refrigerant is R744.

Optionally, the second refrigerant comprises at least 40 vol%, preferably 50 vol%, a second refrigerant (a) having a flammability class of 2L.

Optionally, the second refrigerant (a) is a hydrofluorocarbon (HFC) refrigerant. Alternatively, the second refrigerant (a)is a hydrofluoroolefin (HFO) refrigerant, for example, a R1234 refrigerant.

Preferably, the second refrigerant (a) is R32, or R1234yf, or R1234ze, or any combination thereof. In one preferred embodiment of the invention, the second refrigerant (a) is R1234yf.

Optionally, the second refrigerant further comprises a second refrigerant (b) having a flammability class of class 1. Preferably, the second refrigerant (b) is R134a.

Preferably, the second refrigerant has a flammability class of class 1.

In a preferred embodiment of the invention, the first refrigerant is R744, the second refrigerant (a) is R1234yf or R1234ze, and the second refrigerant (b) is R134a.

Preferably, volume of the second refrigerant in each one of the plurality condensing stages is less than 25 kilograms, preferably less than 20 kilograms, more preferably less than 15 kilograms, for example less than 12 kilograms.

Preferably, the condenser device comprises from 2 to 50 condensing stages, preferably from 5 to 30 condensing stages, more preferably from 6 to 15 heat exchanges, for example from 8 to 10 condensing stages.

Optionally, at least two of the plurality of condensing stages each comprising a regulating device configured to vary the heat removed by the corresponding condensing stage. In one embodiment of the invention, the regulating devices of the at least two of the plurality of condensing stages are of the same type. In an alternative embodiment of the invention, the regulating devices of the at least two of the plurality of condensing stages are of different types.

The regulating device may be an inverter. Preferably, one of the at least two condensing stages comprising the inverter is at the most downstream end of the condenser device. Optionally, the inverter is configured to run between 25% and 150% of the mains frequency, for example between 50% and 120% of the mains frequency.

The regulating device may be a modulation system configured to intermittently block the suction of the corresponding compressing stage. Preferably, the modulation system has a modulation effect of from 10% to 90%.

Preferably, the condenser device further comprises a dry cooler at the most upstream end prior to any of the plurality of condensing stages.

Optionally, the condenser device further comprises one or more sensors, the one or more sensors being configured to measure a temperature of the first or the second refrigerant, a pressure of the first or the second refrigerant, or a combination thereof. Preferably, at least one of the at least one or more sensors is configured to measure the temperature of the first refrigerant exiting the condenser device, the pressure of the first refrigerant exiting the condenser device, or a combination of both.

Preferably, the temperature of the first refrigerant leaving the condenser device is between 2 to 6 K below its condensing temperature.

Preferably, the first refrigerant leaving the condenser device is substantially in liquid phase.

Optionally, each one of the plurality condensing stages comprises a condensing unit and a heat exchanger. Preferably, the heat exchanger is a plate heat exchanger (PHE) .

Optionally, the setpoint of the condensing stage at the most downstream end of the condenser device is lower than the setpoint of any other condensing stage of the condenser device.

According to a second aspect of the invention, it is provided a refrigeration system comprising: a condenser device according to the first aspect of the invention configured to condense a first refrigerant; one or more first evaporators configured to evaporate the first refrigerant to a first temperature, thereby providing cooling to one or more first space; and a receiver configured to receive and store the condensed first refrigerant from the condenser device and to supply the first refrigerant to the evaporators. Optionally, the refrigeration system further comprises one or more second evaporators configured to evaporate the first refrigerant to a second temperature, thereby providing cooling to one or more second space.

Preferably, the one or more first evaporators, or the one or more of the optional second evaporators, or both, are fluidly connected to one or more compressor packs configured to compress the evaporated first refrigerant.

Preferably, the receiver further comprises a gas release mechanism configured to remove gas from the upper part of the receiver.

Also preferably, the first refrigerant leaving the receiver from the lower part of it is substantially in liquid phase.

According to a third aspect of the invention, there is provided a method of controlling a condenser device according to the first aspect of the invention, or a refrigeration system according to the second aspect of the invention. The method comprises:

a) determining the temperature of the first refrigerant being supplied to the condenser device;
b) determining the required temperature of the first refrigerant exiting the condenser device;
c) determining the cooling power of each one of the plurality condensing stages; and
d) determining the number of condensing stages required for obtaining the required temperature of the first refrigerant exiting the condenser device.

When the condenser device comprises a dry cooler, it is preferably that step c) of the method also comprises determining the cooling power of the dry cooler.

When at least two of the condensing stages each comprises a regulating device, it is preferably that step d) of the method comprises determining the regulating effect required for each of the regulating devices.

It will of course be appreciated that features described in relation to one aspect of the present invention may be incorporated into other aspects of the present invention. For example, the system of the invention may incorporate any of the features described with reference to the condenser device of the invention and *vice versa.* Similarly, the method of the invention may also incorporate any of the features described with reference to the apparatus of the invention and *vice versa.*

Description of the Drawings

Embodiments of the present invention will now be described by way of example only with reference to the accompanying schematic drawings of which:

Figure 1    shows a schematic diagram of a condenser device according to a first embodiment of the invention;
Figure 2    shows a schematic diagram of a refrigeration system comprising a condenser device according to a second embodiment of the invention;
Figure 3    shows a graph of the temperature of Refrigerant 1 throughout the cooling string according to a third embodiment of the invention.

Detailed Description

The first refrigerant of the present invention has a flammability class of class 1. Refrigerant classification is set out in International Standards, such as International Standard ISO 817:2014 (or the relevant future versions of this standard), and other equivalent standards.

The first refrigerant of the present invention may be, but not limited to, R718, or R11, or R12, or R22, or R125, or R502, or R507, or R404A, or R407C, or R410A, or any combination thereof. Using a class 1 refrigerant which is classified as non-flammable has been found to improve the overall safety of the refrigeration system. Preferably, the first refrigerant comprises R744 (carbon dioxide, $CO_2$). In one embodiment of the invention, the first refrigerant of the invention is R744. In addition to being low toxicity and non-flammable and therefore desirable for safety and environmental reasons, R744 as a refrigerant offers several other advantages, such as high refrigeration capacity due to its high volumetric cooling capacity; negligible GWP such that, in the event of a leak, the direct impact on climate change is very low; being non-corrosive with most materials; inexpensive to produce and widely available; and being a stable molecule leading to a low potential for decomposition within the refrigeration system. R744 is also considered a long-term refrigerant as there is, at the moment, no impending legislation phasing down or phasing out.

The second refrigerant of the present invention is different from the first refrigerant. The second refrigerant has a flammability class of class 1 or class 2L. It has been recognised that it is likely that the lowest GWP products appropriate for many application end-users will be flammable to a degree, using a class 2L or class 1 refrigerant, which is only mildly flammable or non-flammable, may have the benefit of improved suitability or performance combined with a relatively low safety risk. For example, the second refrigerant may comprise, but not limited to, R32, or R1234, or R454, or R455, or R447, or R452, or R454, or any combination thereof. In one preferred embodiment of the present invention, the second refrigerant has a flammability class of class 1.

Optionally, the second refrigerant comprises a second refrigerant (a). For example, the second refrigerant comprises at least 30 vol%, at least 40 vol%, at least 50 vol%, or at least 60 vol% of the second refrigerant (a). The second refrigerant (a) has a flammability class of 2L. For example, the second refrigerant (a) is a hydrofluorocarbon (HFC) refrigerant, for example, R143, R152, R32, or any combination thereof. In one embodiment of the invention, the second refrigerant (a) is R32. Alternatively, the second refrigerant (a) may be a hydrofluoroolefin (HFO) refrigerant. HFO refrigerants may have a much lower GWP value than its HFC alternatives. In one embodiment of the present invention, the second refrigerant (a) is a R1234 refrigerant, for example R1234yf or R1234ze. Refrigerants may have temperature glide, which is the difference between the saturated vapour temperature and the saturated liquid temperature at constant pressure. Temperature glide may cause the evaporation temperature of the refrigerant to vary at constant pressure with the change of the composition of the refrigerant, thereby causing potential problems of the condenser device or the refrigeration system. As they both are single component refrigerants, R1234yf and R1234ze do not have temperature glide. The behaviour of glide free refrigerants is easier to understand for refrigeration service engineers.

Optionally, the second refrigerant comprises a second refrigerant (b). For example, the second refrigerant comprises at least 10 vol%, at least 20 vol%, at least 30 vol%, or at least 40 vol% of the second refrigerant (b). The second refrigerant (b) has a flammability of class 1. For example, the second refrigerant (b) may be, but not limited to, R718, or R11, or R12, or R22, or R125, or R502, or R507, or R404A, or R407C, or R410A, or R134A, or any combination thereof.

In one embodiment of the present invention, the second refrigerant is R513A which comprises 56 vol% of R1234yf and 44 vol% of R134a. In another embodiment of the present invention, the second refrigerant is R450A which comprises 58 vol% of R1234ze and 42 vol% of R134a.

Preferably, the first refrigerant, or the second refrigerant, or both, have a GWP value of less than 2000, more preferably less than 1000, more preferably less than 800, for example less than 10. In one embodiment of the invention, the first refrigerant and the second refrigerant both have a GWP value of less than 1000. In another embodiment of the invention the first refrigerant and the second refrigerant both have a GWP value of less than 800. In yet another embodiment of the invention, the first refrigerant and the second refrigerant both have a GWP value of no more than 10. For example, the first refrigerant may be R744 (GWP 1). The second refrigerant may be R32 (GWP 675), or R1234yf (GWP 1), or R1234ze (GWP 2), or R513A (GWP 631.4), or R450A (GWP 604.7).

Refrigerants with lower GWP values are considered more environmental friendly and therefore are more desirable and usable in the longer term in view of the tightening regulations in this regard.

Preferably, the first refrigerant, or the second refrigerant, or both, are non-toxic.

According to the invention, the first refrigerant flows in a conduit in a direction of from an upstream end of the condenser device towards a downstream end of the condenser device. The upstream end of the condenser device is where the first refrigerant, preferably in gaseous phase, enters the condenser device; and the downstream end of the condenser device is where the first refrigerant, preferably in liquid phase, exits the condenser device. Preferably, the first refrigerant flows in a conduit that fluidly connects the plurality of the condensing stages.

The second refrigerant of the invention cools and condenses the first refrigerant through the plurality of condensing stages. The mass of the second refrigerant in each one of the plurality condensing stage is configured such that it meets the relevant legal requirements for class 2L refrigerants in the specific application area. Optionally, the total mass of the second refrigerant in each one of the plurality condensing stages is less than 25 kilograms, preferably less than 20 kilograms, more preferably less than 12 kilograms, for example less than 1.75 kilograms. The relatively smaller size of the condensing stages improves safety of the condenser device and the refrigeration system from the point of view of flammability risk in the event of a leak.

The condenser device of the invention comprises a plurality of condensing stages. Using of a plurality of condensing stages improves the systems flexibility, safety and controllability. Relative smaller sized condensing stages may be combined to provide the condensing capacity required. Individual condensing stage may be independently switched on or off depending on the running condition of the refrigeration system and the desired discharging temperature of the first refrigerant. Such an arrangement may also allow for inspection, repair, maintenance or even replacement work being carried out for individual condensing stages independently, without having to shut down the entire refrigeration system or causing significant changes to the overall running of the refrigeration system.

The condenser device comprises a plurality of condensing stages in series connection. That is, the plurality of condensing stages are fluidly connected to one another to form a cool string. The flows in each condensing stage of the first and second refrigerant are in contrasting directions. Each of the plurality of condensing stages may be independently switched on or off depending on the overall output power required. When a condensing stage is switched off, the refrigerant flows through that stage without any heat energy being removed. The first refrigerant changes from vapor to liquid within the cool string formed by the plurality of condensing stages. Preferably, the condensing stage arranged at the most downstream end of the condenser device (the last condensing stage in arrangement) is always switched on, in order to enable improved control of the overall performance of the condenser device, in particular the control of the temperature and pressure of the first refrigerant leaving the condenser device.

Optionally, the condenser device comprises from 2 to 50 condensing stages, preferably from 5 to 30 condensing stages, more preferably from 6 to 15 condensing stages, for example from 8 to 10 condensing stages. The number of condensing stages is chosen such that it complies with the legal requirement for health and safety, and offers sufficient control to the discharging temperature of the first refrigerant. In one embodiment of the invention, the condenser device comprises 8 condensing stages.

Preferably, each one of the plurality of condensing stages comprises a condensing unit (i.e. a compressor, an air cooled condenser device and, possibly, a receiver) and a heat exchanger.

For example, the liquid second refrigerant for each heat exchanger is sourced from a separate condensing unit. The amount of cooling that each one of the plurality of condensing stage provides is dependent on the temperature around its corresponding condensing unit, i.e. the ambient temperature. This means that if the electric supply to all the condensing units of all the plurality of condensing stages are identical, the amount of cooling in Watts provided by each of the exchanger connected to the ccondensing unit in motion is also similar.

Preferably, each one of the condensing unit feeds liquid second refrigerant to the heat exchanger through a flow control device. The gaseous output from one side of the heat exchanger may be fed back to a compressor unit of the condensing stage. The other side of the heat exchanger may act to condense the first refrigerant to a certain extent.

Preferably, the heat exchanger is a plate heat exchanger (PHE). PHEs generally have relatively high efficiencies and therefore require less space than required by other heat exchanger types. The first refrigerant passes through one side of the PHEs and the second refrigerant passes through the other side. The second side may also act as an evaporator for the second refrigerant. The flow of the second refrigerant enters as a liquid and exits as a vapour. Optionally, the flow of the second refrigerant is controlled by a valve, for example a thermostatic expansion valve or the like, set to a certain exit superheat. For example, the expansion valve may be set to an exit superheat of approximately 3-8 K, such as an exit superheat of approximately 5 K.

In one embodiment of the invention, each one of the condensing stage comprises a compressor unit and a fan cooled condensing unit.

Preferably, the condenser device comprises a dry cooler at the most upstream end prior to any of the plurality of condensing stages. The dry cooler is configured to cool the first refrigerant to a condensing temperature with ambient air moving through its coil. Such an arrangement provides initial cooling of the first refrigerant before it enters the condensing stages.

In one embodiment, at least two of the plurality of condensing stages each comprising a regulating device configured to vary the heat removed by the corresponding condensing stage. It is understood that the regulating device would enable the corresponding condensing stage to operate at a proportion of its full capacity, thereby reducing the cooling and condensing effect of the corresponding condensing stage accordingly. The regulating devices of the at least two of the plurality of condensing stages may be of the same type or of different types.

In one embodiment of the present invention, the regulating device is an inverter configured to run at a certain percentage of the mains frequency.

For example, the at least two of the plurality of condensing stages may each comprise a fan cooled condenser device and the inverter is configured to control the speed of its corresponding fan. The result of the calculation for required number of condensing stages in operation based on the required temperature of the first refrigerant may be a non-integer. For example, the system may require 3.4 or 3.7 of the condensing stages in operation in order to provide the cooling and condensing required. Containing condensing stages with inverters provides for improved controlling of the system.

Preferably, the inverter(s) are configured to run between 25% and 150% of the mains frequency, for example between 50% and 120% of the mains frequency. By doing so the combination of the condensing stages with inverters may cover a wide range from one integer to the next. Table 1 shows, as a non-limiting example, the number of condensing stages in action to cover various demands between that needing three condensing stages and four condensing stages.

Table 1

| Demand of Condensing Stages (CS) | CS1 | CS2 | CS3 | CS4 | CS5 | CS6 | CS7 (with inverter) | CS8 (with inverter) |
|---|---|---|---|---|---|---|---|---|
| 3.00 | On | On | Off | Off | Off | Off | 0.50 | 0.50 |
| 3.10 | On | On | Off | Off | Off | Off | 0.55 | 0.55 |
| 3.20 | On | On | Off | Off | Off | Off | 0.60 | 0.60 |

(continued)

| Demand of Condensing Stages (CS) | CS1 | CS2 | CS3 | CS4 | CS5 | CS6 | CS7 (with inverter) | CS8 (with inverter) |
|---|---|---|---|---|---|---|---|---|
| 3.25 | On | On | On | Off | Off | Off | 0.25 | Off |
| 3.30 | On | On | On | Off | Off | Off | 0.30 | Off |
| 3.40 | On | On | On | Off | Off | Off | 0.40 | Off |
| 3.50 | On | On | On | Off | Off | Off | 0.50 | Off |
| 3.60 | On | On | On | Off | Off | Off | 0.60 | Off |
| 3.70 | On | On | On | Off | Off | Off | 0.70 | Off |
| 3.80 | On | On | On | Off | Off | Off | 0.80 | Off |
| 3.90 | On | On | On | Off | Off | Off | 0.90 | Off |
| 3.95 | On | On | On | Off | Off | Off | 0.60 | 0.35 |
| 4.00 | On | On | On | On | Off | Off | Off | Off |

In another embodiment of the present invention, the regulating device is a modulation system configured to intermittently block the suction of the corresponding compressing stage. For example, the modulation system is configured to block the suction of the corresponding compressing stage at a fast frequency and open the suction again a variable time later. The operation of the corresponding compressing stage is not interrupted by the intermittent block of suction and therefore possible lubrication issues that are usually associated with starting and stopping compressing stages may be avoided. The blocking frequency (which is the reciprocal of the "frame time" as known by the skilled person) may be between around once every 5 seconds (that is, with a frame time of 5 seconds) to around once every 30 seconds (that is, with a frame time of 30 seconds), for example around once every 8 seconds (that is, with a frame time of 8 seconds). The duration of the block may be between 90% and 10% of the frame time. For example, when the blocking frequency is once every 15 seconds, the frame time is 15 seconds, and the duration of the block may be between 1.5 seconds and 13.5 seconds. This result in a modulation effect of from 10% to 90% of the refrigeration capacity being supplied. That is, the modulation system may reduce the cooling and condensing effect of the corresponding condensing stage to from 10% to 90% of its full capacity.

In one embodiment, one of the at least two condensing stages comprising a regulating device is at the most downstream end of the condenser device. In other words, one of the at least two condensing stages comprising a regulating device is preferably the last one in the cooling string of the condenser device. It has been found that to make the condenser device exit temperature to be a defined fixed level, the final condensing stage is of great importance. In particular, the control of the temperature of the first refrigerant exiting the condenser device, having a condensing stage comprising a regulating device the end of the cooling string defines the performance of the later stages of the refrigeration system. The other condensing stage or condensing stages comprising a regulating device may be positioned immediately before the last condensing stage, or positioned at any other location within the cooling string.

Optionally, the condenser device may further comprise one or more sensors, the one or more sensors being configured to measure a temperature of the first of second refrigerant, a pressure of the first or second refrigerant, or a combination thereof. Preferably, at least one of the at least one or more sensors is configured to measure the temperature of the first refrigerant exiting the condenser device, the pressure of the first refrigerant exiting the condenser device, or a combination of both. Alternatively, at least some of the at least one or more sensors are configured to measure the temperature, or the pressure, or both, of the first refrigerant exiting each one of the plurality of the condensing stages. The measured temperature and/or pressure data may be used for the control of the condenser device and/or the control of the refrigeration system comprising the condenser device.

The first refrigerant leaving the condenser device is sub-cooled, i.e. the temperature of the first refrigerant leaving the condenser device is lower than its condensing temperature. The sub-cooling at the condenser device may help to ensure that the refrigerant reaches the next step in a refrigeration system is the desired state (i.e. completely liquid). Preferably, the temperature of the first refrigerant leaving the condenser device is between 2 to 6 K below its condensing temperature. In one embodiment of the invention, the temperature of the first refrigerant leaving the condenser device is 5K below its condensing temperature.

The first refrigerant leaving the condenser device is substantially in liquid phase. The expression "substantially in liquid phase" means that the mass of the refrigerant in its gaseous phase is no more than 0.1% of the total mass of the refrigerant (in both gaseous and liquid phases). Gas bubbles in the refrigerant liquid may cause serious problems downstream of the condenser device in a refrigeration system. This is because vapour going through a valve takes up large amount of space leaving very little space for the liquid to go through. The density of the liquid is very much greater than that of the vapour so the mass flow of the refrigerant passing is almost entirely dependent on the amount of liquid passing through the valve.

The refrigeration system according to the invention comprises a receiver. The liquid first refrigerant leaving the condenser device feeds into the receiver. The refrigeration system of the invention comprises one or more first evaporators configured to evaporate the first refrigerant to a first temperature. Optionally, the first temperature is from 0 to -50 °C, preferably from -10 to - 40 °C, more preferably from -15 to -30 °C. In one embodiment of the invention, the first temperature is approximately -25 °C.

The refrigeration system according to the invention may comprise one or more second evaporators configured to evaporate the first refrigerant to a second temperature. Optionally, the first temperature is from 0 to -10 °C, preferably from -2 to -8 °C. In one embodiment of the invention, the second temperature is approximately -5 °C.

The flow into each one of the first or second evaporators may be controlled to provide the set exit superheat from the evaporator by using one or more thermostatic expansion valves or other flow control device. The temperature of the case may be controlled by the operation of one or more solenoid valves for each case. Other controlling methods and mechanism that are known to the person skilled in the art may also be used without altering the general principle of the present invention.

The evaporating temperature for each pack (the first and the second temperature) is defined by the suction pressure which, in turn, is controlled by the number of compressors in motion at the compressor pack. In some embodiments of the invention, it is possible, partially or totally, to substitute speed of compressor(s) if variable speed compressors are used.

Preferably, the one or more first evaporators, or the one or more of the optional second evaporators, or both, are fluidly connected to one or more compressor packs respectively. The compressor packs are configured to compress the evaporated first refrigerant. The suction pressure (i.e. the pressure out of the evaporators) controls the number of compressors in each pack in motion at any one time.

Optionally, the receiver further comprises a gas release mechanism configured to remove gas from the upper part of the receiver. It has been found out that such an arrangement may help to further remove gas bubbles, which may cause serious problems to the refrigeration system, from the first refrigerant fluid. The gas removed from the receiver may be fed back into the system for reuse.

Preferably, in the first refrigerant feeding to the first and second evaporators the mass of the refrigerant in its gaseous phase is no more than 5%, preferably no more than 3%, more preferably no more than 1%, of the total mass of the first refrigerant (in both gaseous and liquid phases). In one embodiment of the invention, the first refrigerant feeding to the first and second evaporators is substantially in liquid phase.

The method of the invention comprises step d) of determining the cooling power of each one of the plurality condensing stages. In one embodiment of the invention, step d) comprises determining the amount of heat removed from the first refrigerant by one stage. This is calculated from the flow of the second refrigerant and Specific Enthalpies of the second refrigerant in liquid and vaporous conditions.

The heat removed by the second refrigerant in each of the plurality of the condensing stages can be calculated as follows:

Heat Removed = Flow of the second refrigerant X Specific Enthalpy Change of the second refrigerant
Wherein:

> Flow of the second refrigerant can either be measured, or be read from instrument specifications, for example from Compressor Performance Data of the compressors in the condensing stages;
> Specific Enthalpy of liquid second refrigerant into the condensing stage and Specific Enthalpy of vaporous second refrigerant out of the condensing stage can be read from Refrigerant Temperature and Specific Enthalpy tables, based on the temperatures of the second refrigerant at those two points.

Knowing the Flow and the Specific Enthalpy Change of the second refrigerant enables the cooling provided by one condensing stage to be known.

Since the cooling from each condensing stage is known, the amount of cooling that will be achieved for the first refrigerant can be calculated from the number of condensing stages in motion that are set in motion.

If the condenser device also comprises a dry cooler, the amount of cooling available from the dry cooler has to be considered in the calculation of the number of condensing stages needed in motion.

Division of the total amount of cooling required by the amount of heat removed by each of the condensing stage gives the number of condensing stages required to be in motion.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

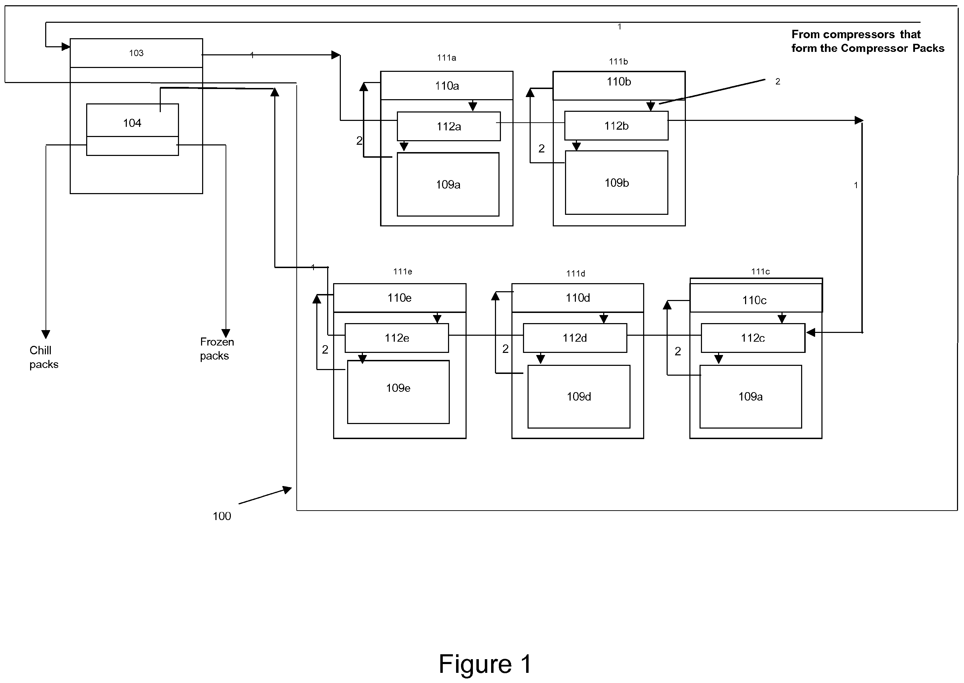

Referring now to Figure 1, which shows a schematic diagram of a condenser device (100) according to a first embodiment of the invention. The condenser device (100) comprises a plurality of condensing stages. Although only five condensing stages (111a to 111e) are shown in Fig 1 for the purpose of illustration, the number of condensing stages may be more or less than that. The first refrigerant 1 flows in a conduit in the direction from an upstream end of the condenser device (100), passes through a dry cooler (103) and then through the plurality of condensing stages (111a to 111e) toward a downstream end of the condenser device (100). During operation of the condenser device, a variable number of 1 to 5 condensing stages are in motion depending on ambient and load conditions.

The first refrigerant 1 in this embodiment is R744 (carbon dioxide, $CO_2$) and the second refrigerant 2 in this embodiment is R1234yf. Other combinations of the first and the second refrigerants according to the invention may, of course, also be used.

In this embodiment, the dry cooler (103) is a typical dry cooler. Each of the condensing stages comprises an air cooled condensing unit (110a to 110e), a compressor (109a to 109e), a plate heat exchanger (PHE) (112a to 112e), and, optionally, a liquid receiver (not shown in the Figure). The compressors (109a to 109e) and the condensing units (110a to 110e) operate on the second refrigerant 2. The second refrigerant 2 evaporates in one side of the PHEs (112a to 112e). The first refrigerant 1 passes through the other side of the PHEs (112a to 112e) in sequence and feeds a first refrigerant Receiver (104)

Figure 1 shows the first refrigerant 1 enters the dry cooler (103) (optionally from one or more Refrigerant 1 compressor packs, not shown in the Figure). It then passes through a number of condensing stages (111a-111e) having its enthalpy reduced in each one. Each PHE (112a-112e) is fed on the non-first refrigerant side by the second refrigerant 2. The second refrigerant 2 enters the PHEs as liquid and exits it as vapour. (The operation with the second refrigerant is standard refrigeration practice using compressors (109a-109e) and air cooled condensing units (110a-110e))

The condensed first refrigerant 1 is subsequently provided to chill packs (not shown in the Figure) and the frozen packs (not shown in the Figure).

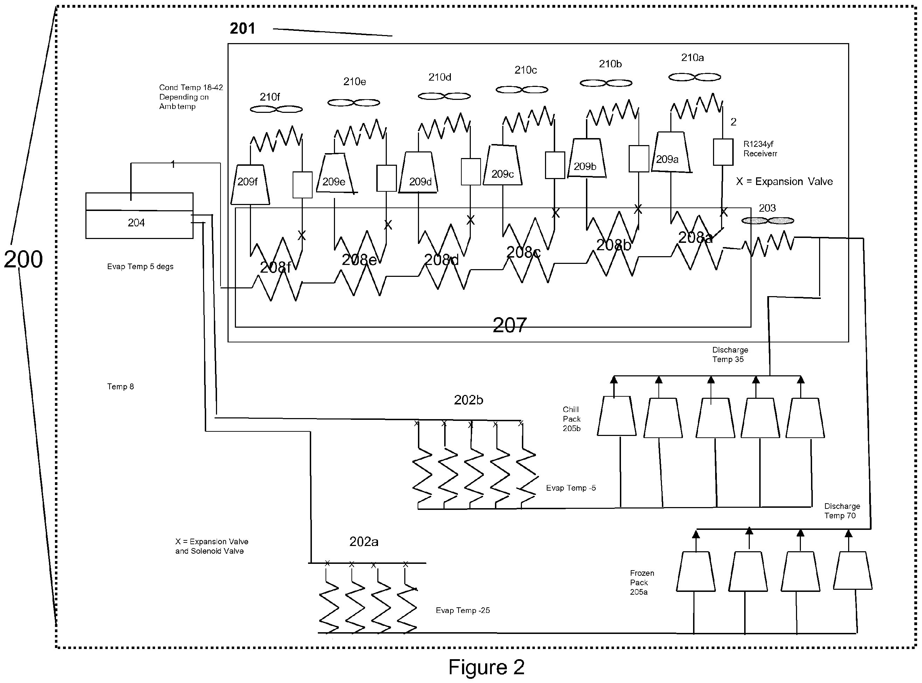

Now referring to Figure 2, which shows a schematic diagram of a refrigeration system (200) according to the invention. In this embodiment, R744 (carbon dioxide, $CO_2$) is used as the first refrigerant 1 and R1234yf is used as the second refrigerant 2. Other combinations of the first and the second refrigerants as disclosed herein may, of course, also be used.

The refrigeration system (200) comprises a condenser device (201) according to the invention. The condenser device (201) may have a similar arrangement to the condenser device (100) as shown in Figure 1. For example, the condenser device (201) shown in Figure 2 comprises a plurality of condensing stages. Six condensing stages are shown in Fig 2 for the purpose of illustration. The actual number of condensing stages may be more or less than that. The condenser device (201) also comprises a dry cooler (203) prior to the plurality of condensing stages. Each condensing stage comprises a condensing unit (210a to 210f), a compressor (209a to 209f) and a plate heat exchanger (PHE) (208a to 208f). The refrigeration system (200) further comprises a receiver (204). The cooling string (207) comprises the dry cooler (203) and the plurality of condensing stages.

The refrigeration system (200) also comprises a series of first evaporators (202a) and a series of second evaporators (202b). The first evaporators (202a) are for the chill packs (205b) and the first evaporation temperature in this embodiment is set to -5 °C. The second evaporators (202b) are for the frozen packs (205a) and the second evaporation temperature in this embodiment is set to -25 °C. There may be valves X at the entry to the evaporators. These control the liquid flow into each evaporator in art so as to hold each cabinet at its desired temperature. These valves operate in such a way that the refrigerant flowing out from the evaporators is in the vapour phase.

The vapour is fed to the suction ports of the chill packs (205b) and the frozen packs (205a) as appropriate for the cabinet type. Suction set-point pressures for the two packs can be measured and the number of compressors in motion is adjusted to hold those pressures.

The discharges of the first refrigerant from the compressor packs combine and act as the input to dry cooler (203) and the cooling string (207) from which the first refrigerant 1 passes to the receiver (204).

Examining the cooling process in the condenser device (201), the cooling and condensing of the first refrigerant 1 by each plate heat exchanger (208a to 208f) comes from the second refrigerant being condensed and compressed in the compressors (209a to 209f) and the condensing units (210a to 210f). The suction pressure (and therefore temperature) for the second refrigerant 2 (R1234yf in this embodiment) is the same for each condensing stage. The condensing pressure for the second refrigerant (R1234yf) is dependent on the ambient temperature. Thus, the cooling at each PHE (208a to 208f) where the condensing stage is in motion is the same and depends only on ambient temperature.

The evaporated second refrigerant 2 is cooled by ambient air in the condensing unit (210a to 210f).

During operation, the output temperature of the first refrigerant 1 (R744 in this embodiment) may be monitored for each one of the plurality of the condensing stages, and compared with the condensing temperature of it at the prevailing pressure. If the measured output temperature is not lower than the condensing temperature by a preset amount (for example 3 K), the next condensing stage may be switched on (or be kept operating). If not, the following stages are not needed and can be left non-motional. By doing so, the temperature of the liquid first refrigerant 1 exiting the cooling string(207) and entering the receiver will be sub-cooled (at a temperature significantly lower than the condensing temperature of it at the prevailing pressure by the defined as required preset amount). This means that the amount of cooling that is required from the first and second evaporators (202a and 202b) will be reduced and the electricity used by them will also be reduced albeit at the expense of more electricity used by the condenser device.

To perform control of the temperature of the first refrigerant exiting the condenser device, it is necessary to know the amount of heat being removed from the first refrigerant by each of the plurality of the condensing stages and the flow of the first refrigerant that is passing through it. There are a number of ways in which this flow can be established. The following two methods are disclosed based on the condenser device as illustrated in Figures 1 and 2, and are disclosed as non-limiting embodiments only.

The first method depends on knowledge of the characteristics of the compressors of the condensing unit (i.e. the amount of mass flow that will be pumped, per compressor in motion, at the combination of input and output pressures experienced). This in combination with knowledge of the number of compressors in motion enables the flow from each pack to be established. The sum of these flows gives the flow of the first refrigerant through the condenser device.

A second method is based on the enthalpy change in the dry cooler. As the dry cooler uses the ambient air to cool the evaporated first refrigerant, the amount of heat that will be removed by the dry cooler is dependent on the Temperature Difference (TD) between the fluid passing through it and the ambient air temperature. The temperature of the fluid passing through the dry cooler is the mean of the temperature on input and that on exit. For the method to give a correct answer, it is required that the exit temperature exceeds the condensing temperature of the first refrigerant. This can be problematic in that state change may commence in the dry cooler. To avoid this difficulty, the two temperatures for the calculation of the mean temperature of the first refrigerant can be taken at the entry and a certain way through (for example, 1/3 of the way through) the dry cooler.

The dry cooler could have been calibrated for the amount of heat that it will remove at different air ambient temperatures. From this and tables of specific enthalpy (Sp Enth) at different temperatures and pressures, the amount of heat that will have been removed by the fraction of, or all of, the dry cooler is known. The power being removed from the first refrigerant by the dry cooler is determined by:

$$\text{Power} = (Sp\ Enth_{In} - Sp\ Enth_{Out}) \times \text{F}; \qquad \text{Formula (I)}$$

Wherein:

Sp Enth$_{in}$ is the specific enthalpy of the first refrigerant flowing into the dry cooler;
Sp Enth$_{out}$ is the specific enthalpy of the first refrigerant flowing out of the dry cooler; and
F is the flow of the first refrigerant.

This Power will have to be multiplied by an appropriate factor if the "Out" value is taken within the cooler rather than at the exit.

Based on Formula (I), the flow can then be calculated from the following formula:

$$\text{F} = \frac{Power}{Sp\ Enth_{in} - Sp\ Enth_{out}}; \qquad \text{Formula (II)}$$

The flow through the condenser device can be established by any one of, or a combination of, the methods outlined above. Alternatively, the flow through the condenser device may also be determined by any other method that is known to the person skilled in the art.

As well as the flow of the first refrigerant, the energy that needs to be removed from the first refrigerant and the amounts of heat that will be removed by the dry cooler and each of the condensing stages can be calculated.

The amount of energy that has to be removed from the first refrigerant can be calculated from:

$$\text{Power} = Flow_1 \times (SpEnth_{in}' - SpEnth_{dewpt}); \quad \text{Formula (III)}$$

Wherein:

Flow$_1$ is the flow of the first refrigerant through the condensing unit;
SpEnth$_{in}$' is the Specific Enthalpy of the first refrigerant at the condensing pressure and input temperature to the dry cooler.

SpEnth$_{dewpt}$ is the Specific Enthalpy of the first refrigerant at the condensing pressure and dew point temperature.

The amount of energy that is removed by the dry cooler is known from its characterisation in terms of ambient temperature, the temperature difference between ambient and the average through the cooler temperature of the first refrigerant.

The amount of energy that is removed from the first refrigerant in each heat exchanger is the same as the amount removed from the other side of the heat exchanger by the second refrigerant. This amount is known from the temperatures of the second refrigerant in and out of the heat exchanger and the compressor characteristics. The amounts are the same for all units in motion except that, where regulating devices are used, an appropriate ratio for the actually capacity at which the compressor is operating has to be applied.

Having determined the flow, the number of condensing units needed in motion for any load can be calculated. As stated earlier, the amount of power that needs to be removed is given by

$$\text{Power} = (Sp\ Enth_{In} - Sp\ Enth_{Out}) \times \text{F}; \quad \texttt{Formula (IV)}$$

Knowing the amount of energy needing to be removed and the amount that each stage will remove means that the number of units that are needed to be in motion can be calculated. To the extent that the number of units is non-integral, either regulating devices (or compressor(s) with regulating devices) can be appropriately used or the next integral number of units can be used.

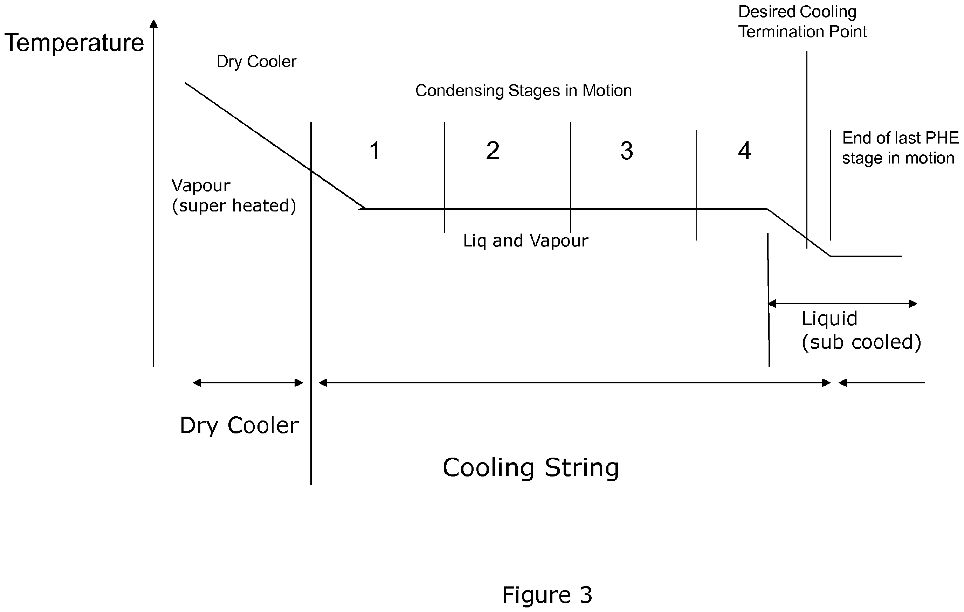

Figure 3 shows an exemplary diagram showing the change of state of the first refrigerant through a dry cooler followed by a condenser device of the invention. For the purpose of illustration only, the condenser device of Figure 3 comprises four condensing stages in full motion. As shown in Fig 3, the temperature of the first refrigerant along cooling string keeps decreasing until condensation starts. In the section where condensing occurs, the temperature of the first refrigerant remains constant. Once condensation is complete, the temperature of the first refrigerant starts decreasing again as progress is made along the cooling string. The purpose of finding the point where the condensation is complete is to avoid unnecessary cooling of the component downstream of that point in the cooling string in the condenser device.

The purpose of whichever of these calculations is chosen is to enable the cooling per condensing stage of the condenser device (and the dry cooler if one is present) to be calculated. If regulating device is in use on the last two condensing stages, the cooling that they provide has to be reduced in line with regulating effect provided by the corresponding regulating device.

When starting up a refrigeration system of the invention, the condenser device need to be started first so that there is liquid first refrigerant available in the receiver. Once this is achieved, the first and second evaporators, and the chill and frozen packs, may be started. It is important that they are started slowly - i.e. evaporators and compressors started one at a time with significant times between them. The refrigeration system should move forward towards the equilibrium stage as described above. The start-up of the condenser device should be relatively fast and that of the first and second evaporators (and of the compressor packs) relatively slow. Once equilibrium is close to having been reached, the system can be controlled using the method of the invention, in order to obtain the desired degree of sub-cooling at the exit of the condenser device going into the receiver.

As the second refrigerant used in the condenser device and the refrigeration system of the invention is a class 2L refrigerant, the arrangement of these refrigeration systems must meet the legal requirement in the relevant regulations in this regard.

The following paragraphs give exemplary information of the relevant regulations based on EN 378 and R1234yf being the second refrigerant. It is included for the purpose of completeness, but is not considered relevant for systems according to the present invention.

In a Machinery Room, there is no charge restriction but the conditions for a machinery room must be adhered to. (These conditions are outlined in EN378-3 5.1-5.14)

In open air, there is no charge restriction but the conditions must be such that pooling of refrigerant will not occur and/or not be able to flow into any nearby building in the event of leakage.

In a Ventilated Enclosure, the charge permitted is calculated as 56.36 kg but the amount of air movement is defined in terms of the volume of the space, the amount of refrigerant in the system, and the mechanical or other air movement equipment present.

There is a final "de minimis" allowance that systems containing less than 150g are automatically permitted.

Example 1 - An equilibrium status of one embodiment of a refrigeration system according to the current invention

| Ambient Temperature | 22 | degs C |

(continued)

| | | | |
|---|---|---|---|
| Condensing Stages | | | |
| Compressors on Refrigerant 2 (R1234yf) | | | |
| Compressor Type | 4NES-14Y-40P | | |
| Condensing Temperature | 32 | degs C | |
| Evaporating Temperature | 5 | degs C | |
| Cooling Capacity | 39.9 | kW | |
| Power In | 6.95 | kW | |
| Mass Flow | | g/s | |
| Compressors on Refrigerant 1 (R744) | | | |
| Compressor Type | 4MTC-7K | | |
| Condensing Temperature | 8 | degs C | |
| Evaporating Temperature | -5 | degs C | |
| Cooling Capacity | 29.59 | kW | |
| Power In | 3.1 | kW | |
| Mass Flow | 39.6 | g/s | |
| Compressors on Refrigerant 1 (R744) | | | |
| Compressor Type | 2HSL-3K-40S | | |
| Condensing Temperature | 8 | degs C | |
| Evaporating Temperature | -25 | degs C | |
| Cooling Capacity | 8.87 | kW | |
| Power In | 2.61 | kW | |

| | | |
|---|---|---|
| Mass Flow | 133 | g/s |
| At 23 Ambient | | |
| Chill Load | 88 | kW |
| Frozen Load | 28.2 | kW |
| No of Comps R744 Chill =88/17.88 | 2.97 | No of units |
| No of Comps R744 Frozen =28.2/5.35 | 3.18 | No of units |
| Condensing Stages Reqd | | |
| Total Direct Load | 116.2 | kW |
| Total Overhead Load (Ht Into Chill & Frozen Comps which is passed to Cond Stages for discharge) | 17.5 | kW |
| Less Load Removed by Dry Cooler | -12.8 | kW |
| Total Cond Stages Load | 120.9 | kW |
| No of Cond Stages Needed in Motion | 3.0 | No of units |
| Power Into System | 38.58 | kW |
| CoP | 3.01 | |

Additional aspects of the invention are set out in the following numbered paragraphs:

1. A condenser device for use in a refrigeration system comprising:

a first refrigerant flowing in a conduit in a direction of from an upstream end of the condenser device towards a downstream end of the condenser device, the first refrigerant having a flammability class of class 1; and

a plurality of condensing stages in series connection, the condensing stages being configured such that each one of the plurality of condensing stages may be switched on or off independent of other condensing stages;

wherein the condenser device further comprises a second refrigerant for cooling and condensing the first refrigerant; and wherein the second refrigerant has a flammability class of class 2L.

2. The condenser device of paragraph 1, wherein the first refrigerant, or the second refrigerant, or both, have a GWP of less than 700.

3. The condenser device of any one of paragraphs 1 to 2, wherein the first refrigerant comprises at least 50% R744 by volume, preferably at least 70% R744 by volume, more preferably at least 90% R744 by volume; and/or wherein the second refrigerant comprises at least 50% R1234yf by volume, preferably at least 70% R1234yf by volume, more preferably at least 90% R1234yf by volume.

4. The condenser device of any one of paragraphs 1 to 3, wherein the first refrigerant is R744, and/or wherein the second refrigerant is R1234yf.

5. The condenser device of any one of paragraphs 1 to 4, wherein the volume of the second refrigerant in each one of the plurality condensing stages is less than 15 kilograms, for example less than 12 kilograms.

6. The condenser device of any one of paragraphs 1 to 5, wherein the condenser device comprises from 8 to 10 condensing stages, for example 8 condensing stages.

7. The condenser device of any one of paragraphs 1 to 6, wherein at least two of the plurality of condensing stages each comprising an inverter.

8. The condenser device of paragraph 7, wherein one of the at least two condensing stages comprising the inverter is at the most downstream end of the condenser device.

9. The condenser device of paragraph 7 or 8, wherein the inverter is configured to run between 25% and 150% of the mains frequency, for example between 50% and 120% of the mains frequency.

10. The condenser device of any one of paragraphs 1 to 9, wherein the condenser device comprises a dry cooler at the most upstream end prior to any of the plurality of condensing stages.

11. The condenser device of any one of paragraphs 1 to 10, wherein the condenser device further comprises one or more sensors, the one or more sensors being configured to measure a temperature of the first or second refrigerant, a pressure of the first or second refrigerant, or a combination thereof.

12. The condenser device of paragraph 11, wherein at least one of the at least one or more sensors is configured to measure the temperature of the first refrigerant exiting the condenser device, the pressure of the first refrigerant exiting the condenser device, or a combination of both.

13. The condenser device of any one of paragraphs 1 to 12, wherein the temperature of the first refrigerant leaving the condenser device is between 2 to 6 K below its condensing temperature.

14. The condenser device of any one of paragraphs 1 to 13, wherein the first refrigerant leaving the condenser device is substantially in liquid phase.

15. The condenser device of any one of paragraphs 1 to 14, wherein each one of the plurality condensing stages comprises a condensing unit and a heat exchanger.

16. The condenser device of paragraph 15, wherein the heat exchanger is a plate heat exchanger.

17. The condenser device of any one of paragraphs 1 to 16, wherein the setpoint of the condensing stage at the most downstream end of the condenser device is lower than the setpoint of any other condensing stage of the condenser device.

18. A refrigeration system comprising:

the condenser device according to any one of paragraphs 1 to 17;

one or more first evaporators configured to evaporate the first refrigerant to a first temperature, thereby providing cooling to one or more first spaces;

one or more second evaporators configured to evaporate the first refrigerant to a second temperature, thereby providing cooling to one or more second spaces; and

a receiver configured to receive and store the condensed first refrigerant from the condenser device and to supply the first refrigerant to the evaporators.

19. The refrigeration system of paragraph 18, wherein the one or more first evaporators, or the one or more second evaporators, or both, are fluidly connected to one or more compressor packs configured to compress the evaporated first refrigerant.

20. The refrigeration system of paragraph 18 or 19, wherein the receiver further comprises a gas release mechanism configured to remove gas from the upper part of the receiver.

21. The refrigeration system of any one of paragraphs 18 to 20 wherein the first refrigerant leaving the receiver from the lower part of it is substantially in liquid phase.

22. A method of controlling a refrigeration system of any one of the paragraphs 18 to 21, or The condenser device of any one of the paragraphs 1 to 17, wherein the method comprises:

a) determining the temperature of the first refrigerant being supplied to the condenser device;

b) determining the required temperature of the first refrigerant exiting the condenser device;

c) determining the cooling power of each one of the plurality condensing stages; and

d) determining the number of condensing stages required for obtaining the required temperature of the first refrigerant exiting the condenser device.

23. The method of paragraph 22, wherein when the condenser device comprises a dry cooler, step c) of the method also comprises determining the cooling power of the dry cooler.

24. The method of paragraph 22 or 23, wherein when at least two of the condensing stages each comprises an inverter, step d) of the method comprises determining the power required for each of the inverters.

**Claims**

1. A condenser device for use in a refrigeration system comprising:

a first refrigerant flowing in a conduit in a direction of from an upstream end of the condenser device towards a downstream end of the condenser device, the first refrigerant having a flammability class of class 1; and a plurality of condensing stages in series connection, the condensing stages being configured such that each one of the plurality of condensing stages may be switched on or off independent of other condensing stages;

wherein the condenser device further comprises a second refrigerant for cooling and condensing the first refrigerant; wherein the second refrigerant is different from the first refrigerant; and wherein the second refrigerant has a flammability class of class 1 or class 2L.

2. The condenser device of claim 1, wherein the first refrigerant, or the second refrigerant, or both, have a GWP of less than 700; and/or

3. The condenser device of claim 1 or 2, wherein the second refrigerant comprises at least 40 vol%, preferably at least 50 vol%, a second refrigerant (a) having a flammability class of 2L; optionally, the second refrigerant (a) is a R1234 refrigerant, for example R1234yf or R1234ze.

4. The condenser device of claim 3, wherein the second refrigerant further comprises a second refrigerant (b) having a flammability class of class 1; optionally, the second refrigerant (b) is R134a.

5. The condenser device of any one of claim 1 or 4, wherein the second refrigerant has a flammability class of class 1; and/or wherein the first refrigerant comprises at least 50% R744 by volume, preferably at least 70% R744 by volume, more preferably at least 90% R744 by volume.

6. The condenser device of any one of claims 1 to 5, wherein the first refrigerant is R744, the second refrigerant (a) is R1234yf or R1234ze, and the second refrigerant (b) is R134a.

7. The condenser device of any one of claims 1 to 6, wherein the volume of the second refrigerant in each one of the plurality condensing stages is less than 15 kilograms, for example less than 12 kilograms; and/or wherein the condenser device comprises from 8 to 10 condensing stages, for example 8 condensing stages.

8. The condenser device of any one of claims 1 to 7, wherein at least two of the plurality of condensing stages each comprising a regulating device configured to vary the heat removed by the corresponding condensing stage; optionally, the regulating devices of the at least two of the plurality of condensing stages are of the same type or are of different types.

9. The condenser device of claim 8, wherein one of the at least two condensing stages comprising the regulating device is at the most downstream end of the condenser device.

10. The condenser device of any one of claims 8 to 9, wherein the regulating device is an inverter; optionally, the inverter is configured to run between 25% and 150% of the mains frequency, for example between 50% and 120% of the mains frequency; alternatively, the regulating device is a modulation system configured to intermittently block the suction of the corresponding compressing stage; optionally, the modulation system has a modulation effect of from 10% to 90%.

11. The condenser device of any one of claims 1 to 10, wherein the condenser device comprises a dry cooler at the most upstream end prior to any of the plurality of condensing stages; and/or wherein each one of the plurality condensing stages comprises a condensing unit and a heat exchanger, for example a plate heat exchanger.

12. The condenser device of any one of claims 1 to 11, wherein the condenser device further comprises one or more sensors, the one or more sensors being configured to measure a temperature of the first or second refrigerant, a pressure of the first or second refrigerant, or a combination thereof; preferably, at least one of the at least one or more sensors is configured to measure the temperature of the first refrigerant exiting the condenser device, the pressure of the first refrigerant exiting the condenser device, or a combination of both.

13. The condenser device of any one of claims 1 to 12, wherein the temperature of the first refrigerant leaving the condenser device is between 2 to 6 K below its condensing temperature; and/or wherein the first refrigerant leaving the condenser device is substantially in liquid phase; and/or wherein the setpoint of the condensing stage at the most downstream end of the condenser device is lower than the setpoint of any other condensing stage of the condenser device.

14. A refrigeration system comprising:

the condenser device according to any one of claims 1 to 13 configured to condense a first refrigerant;
one or more first evaporators configured to evaporate the first refrigerant to a first temperature, thereby providing cooling to one or more first spaces;
optionally one or more second evaporators configured to evaporate the first refrigerant to a second temperature, thereby providing cooling to one or more second spaces; and

a receiver configured to receive and store the condensed first refrigerant from the condenser device and to supply the first refrigerant to the evaporators.

15. The refrigeration system of claim 14, wherein the one or more first evaporators, or the one or more of the optional second evaporators, or both, are fluidly connected to one or more compressor packs configured to compress the evaporated first refrigerant; and/or wherein the receiver further comprises a gas release mechanism configured to remove gas from the upper part of the receiver; and/or wherein the first refrigerant leaving the receiver from the lower part of it is substantially in liquid phase.

16. A method of controlling a refrigeration system of any one of the claims 14 to 15, or the condenser device of any one of the claims 1 to 13, wherein the method comprises:

a) determining the temperature of the first refrigerant being supplied to the condenser device;
b) determining the required temperature of the first refrigerant exiting the condenser device;
c) determining the cooling power of each one of the plurality condensing stages; and
d) determining the number of condensing stages required for obtaining the required temperature of the first refrigerant exiting the condenser device.

17. The method of claim 16, wherein when the condenser device comprises a dry cooler, step c) of the method also comprises determining the cooling power of the dry cooler; and/or wherein when at least two of the condensing stages each comprises a regulating device, step d) of the method comprises determining the regulating effect required for each of the regulating devices.

From compressors that
form the Compressor Packs

103

104

111a
110a
112a
109a

111b
110b
112b
109b

111e
110e
112e
109e

111d
110d
112d
109d

111c
110c
112c
109a

Chill
packs

Frozen
packs

100

Figure 1

Figure 2

Figure 3

Europäisches
Patentamt

European
Patent Office

Office européen
des brevets

# EUROPEAN SEARCH REPORT

Application Number

EP 18 20 9124

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/180278 A1 (YAMASHITA TETSUYA [JP] ET AL) 18 July 2013 (2013-07-18) | 1-3,7-15 | INV.<br>F25B5/02 |
| Y | * paragraph [0015] - paragraph [0054]; | 3-6 | F25B6/04 |
| A | figures 1-4 * | 16,17 | F25B7/00<br>F25B9/00 |
| | ----- | | F25B49/02 |
| X | WO 2017/192302 A1 (CARRIER CORP [US]) 9 November 2017 (2017-11-09) * paragraph [0039] - paragraph [0064]; figures 1-7 * | 1-3,7-15 | |
| | ----- | | |
| X | JP 2009 014271 A (MITSUBISHI ELECTRIC CORP; NIPPON KENTETSU CO LTD) 22 January 2009 (2009-01-22) * paragraph [0011] - paragraph [0146]; figures 1-18 * | 1-3,7-14 | |
| | ----- | | |
| Y | WO 2017/165764 A1 (HONEYWELL INT INC [US]) 28 September 2017 (2017-09-28) * page 5 - page 40 * | 3,5 | |
| | ----- | | |
| Y | EP 2 767 569 A1 (HONEYWELL INT INC [US]) 20 August 2014 (2014-08-20) * paragraph [0031] - paragraph [0032] * | 4,6 | TECHNICAL FIELDS SEARCHED (IPC) |
| | ----- | | F25B |

The present search report has been drawn up for all claims

| Place of search | Date of completion of the search | Examiner |
|---|---|---|
| Munich | 4 April 2019 | Szilagyi, Barnabas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 492 838 A1**

## ANNEX TO THE EUROPEAN SEARCH REPORT
## ON EUROPEAN PATENT APPLICATION NO.

EP 18 20 9124

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2019

| Patent document cited in search report | | | Publication date | Patent family member(s) | | | Publication date |
|---|---|---|---|---|---|---|---|
| US 2013180278 | A1 | | 18-07-2013 | CN | 103221760 | A | 24-07-2013 |
| | | | | EP | 2642220 | A1 | 25-09-2013 |
| | | | | JP | WO2012066763 | A1 | 12-05-2014 |
| | | | | US | 2013180278 | A1 | 18-07-2013 |
| | | | | WO | 2012066763 | A1 | 24-05-2012 |
| WO 2017192302 | A1 | | 09-11-2017 | CN | 109073285 | A | 21-12-2018 |
| | | | | EP | 3452763 | A1 | 13-03-2019 |
| | | | | WO | 2017192302 | A1 | 09-11-2017 |
| JP 2009014271 | A | | 22-01-2009 | JP | 4794511 | B2 | 19-10-2011 |
| | | | | JP | 2009014271 | A | 22-01-2009 |
| WO 2017165764 | A1 | | 28-09-2017 | KR | 20180120150 | A | 05-11-2018 |
| | | | | US | 2018017292 | A1 | 18-01-2018 |
| | | | | WO | 2017165764 | A1 | 28-09-2017 |
| EP 2767569 | A1 | | 20-08-2014 | EP | 2767569 | A1 | 20-08-2014 |
| | | | | US | 2014223927 | A1 | 14-08-2014 |

EPO FORM P0459

For more details about this annex : see Official Journal of the European Patent Office, No. 12/82